# EUROPEAN PATENT APPLICATION

(11) **EP 1 903 226 A2**
(43) Date of publication of application: **26.03.2008**
(21) Application number: 07112541.3
(22) Date of filing: 16.07.2007
(51) Int. Cl.: F16C 1/26

(54) **Sealing element for remote-control wires**

(30) Priority: 19.07.2006 IT MI20060261 U
(71) Applicant: Finan.Co S.A.S. di Bruno Barbieri & C., 20056 Trezzo sull'Adda (MI) (IT)
(72) Inventor: Barbieri, Walter, 20056 Trezzo Sull'Adda-Milano (IT)
(74) Representative: De Gregori, Antonella

(57) **Abstract**

A sealing element (22) for remote-control is described, of the type comprising a flexible transmission wire (10) capable of axially passing inside a reaction sheath (12). The sheath (12) is made integral, in correspondence with one of its ends, with a hollow cylindrical body (14) in which the wire (10) runs and on which one or more grooves (20) are envisaged, for the insertion of the sealing element (22). Said sealing element (22) consists of an outer sleeve (24) made of a deformable elastic material in which at least one sealing ring (26), also made of a deformable elastic material but harder with respect to the outer sleeve (24), is coaxially inserted.

## Description

The present invention relates to a sealing element for wires, of the type used in particular for remote-control activation, which has specific characteristics of utility and commodity of use.

Remote control commands of the type comprising a flexible transmission wire which runs inside a protection sheath are normally used for the activation of oleodynamic valves, accelerator wires, brake wires, clutch wires, push-pull wires in general and any application controlled by a flexible wire installed on operating means for work-yards, agricultural tractors, motor vehicles, trucks and industrial machines in general. The ends of the transmission wire are respectively connected to a drive box, equipped with a suitable control lever or pedal for the operator, and to the element to be driven, situated on the machine at a certain distance from the above drive box.

These remote-control commands or transmissions normally have a continuous structure produced by means of a single portion of wire and a relative sheath, sealing elements consisting of annular washers made of rubber or deformable plastic material being normally envisaged at their ends to prevent powder or dirt in general from penetrating the portion of space between the wire and the sheath.

As the flexible wire is destined to run axially inside the sheath for transmitting the commands, the end washer, especially if it is made of a particularly soft material for a better sealing, causes a significant friction on the wire itself, which can lead to an incorrect functioning of the remote control and rapid wear of the washer.

If, on the other hand, the washer is made with a material which is too hard in order to reduce the friction on the wire, its sealing and dirt-protecting function, especially with respect to finer materials, is consequently reduced.

An objective of the present invention is therefore to produce a sealing element situated between the wire and the end of the relative sheath in a remote control which is capable of solving these drawbacks, providing a high seal and dirt protection and at the same time reducing friction on the wire.

A further objective of the present invention is to provide a sealing element for remote-control wires which is substantially simple, long-lasting and reliable.

These objectives according to the present invention are achieved by providing a sealing element for wires used in particular for remote control as specified in claim 1.

Further advantageous characteristics of the invention are indicated in the subsequent claims.

The characteristics and advantages of a sealing element for remote-control wires according to the invention will appear more evident from the following description, provided for illustrative and non-limiting purposes, of a particular embodiment referring to the enclosed schematic drawings in which:
figure 1 is a longitudinal sectional view of a portion of a remote control on which the sealing element according to the invention is installed;
figure 2 is a longitudinal sectional view of the sealing element according to the invention;
figure 3 is a longitudinal sectional view of the sealing element of figure 2, in which the single components are visible; and
figure 4 is a longitudinal sectional view of a portion of a remote control on which another embodiment of the sealing element according to the invention is installed.

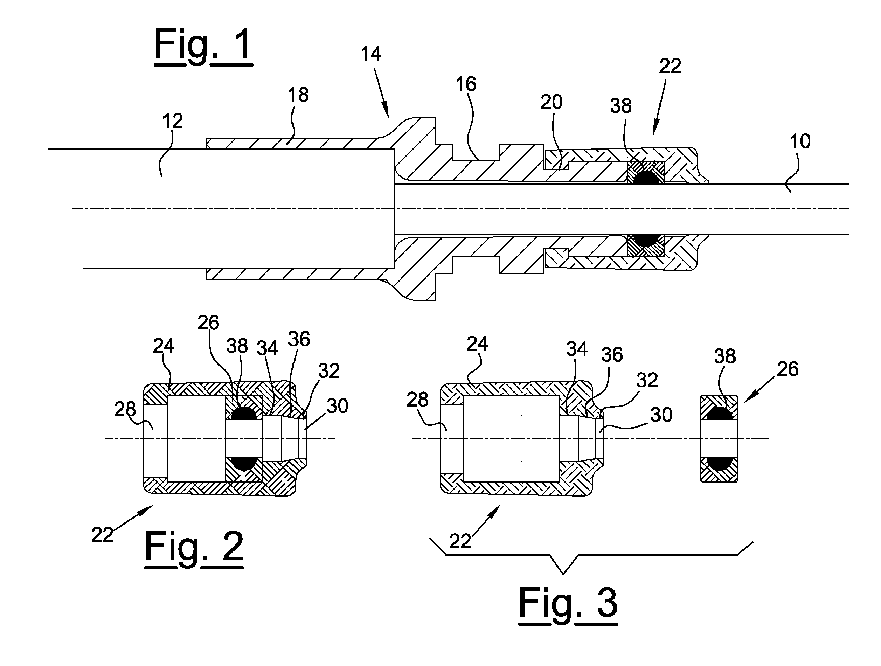

With particular reference to figure 1 of the enclosed drawings, this shows a longitudinal sectional view of a portion of a remote control consisting of a flexible transmission wire 10, preferably metallic, which is capable of axially running inside a reaction sheath 12.

The transmission wire 10 of the commands is suitable for being interpositioned between a driving element, such as a lever actuator, and an element to be driven (not shown), with the relative sheath 12 anchored to fixed reaction components of said elements by means of a hollow cylindrical body 14 in the form of a sleeve or bush, made of a rigid material, equipped with one or more suitable anchoring grooves 16 with the fixed component.

The bush 14 also has a portion 18 suitable for insertion on the terminal part of the sheath 12, as well as one or more grooves 20 on which a sealing element 22 can be inserted.

According to the invention, the sealing element 22 in which the wire 10 runs, substantially consists of an outer sleeve 24 made of a deformable elastic material in which at least one sealing ring 26, for example an 0-ring, also made of a deformable elastic material, is coaxially inserted.

The sleeve 24 is provided, at one of its ends, with a hole 28 suitable for the insertion of the sealing element 22 in the groove 20 of the bush 14, whereas on the opposite end there is a hole 30, having a smaller diameter with respect to the first hole 28, destined for providing the wire 10 with a seal.

The outer sleeve 24 is produced with a material having a different hardness with respect to the material with which the internal sealing ring 26 is made, so that the overall sealing element 22 is capable of combining the advantages of an adequate seal against liquids and dirt, at the same time limiting friction on the wire 10.

According to a particularly preferred embodiment of the present invention, the outer sleeve 24 is produced with a harder material with respect to the material, for example rubber, with which the internal sealing ring 26 is made. The outer sleeve 24 however could also be produced with a softer material with respect to the material with which the internal sealing ring 26 is made, also included in the protection scope of the present invention.

In the embodiment illustrated, the hole 30 envisages a first portion 32 having a reduced diameter, smaller than the diameter of the wire 10, to be compressed around the wire 10 itself in order to guarantee the necessary seal, a second portion 34 having a larger diameter, which does not adhere to the surface of the wire 10 to limit the friction, and a connecting portion 36 between the above portions 32 and 34.

Again in order to reduce the friction between the wire 10 and the overall sealing element 22, the sealing ring 26 can be advantageously provided with an internal circumferential cavity 38, which defines a chamber which can be filled with lubricating fluid, such as for example industrial grease.

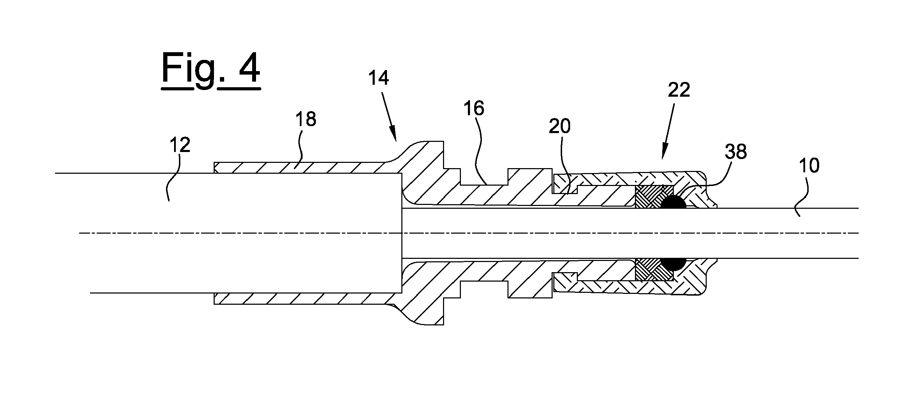

According to another embodiment of the present invention, illustrated in figure 4, the cavity 38 can be situated either on the sealing ring 26 or on the sleeve 24 and, more specifically, in the contact portion between them, so as to form a single chamber which can be filled with lubricating fluid.

It can thus be seen that the sealing element for remote-control wires according to the invention fully achieves the objectives specified above, as the combination of the two washers coaxially inside each other obtains in particular the following advantages:
- it diminishes the friction between the wire and the sealing element, as a result of the limited contact surface between the wire itself and the softer portion of the sealing element, in addition to the possible presence of lubricating fluids;
- it increases the capacity of the sealing element of blocking the entrance of liquids, dirt and fine powders in the interstices between the wire and its sheath due to the combined use of deformable elastic materials having a different hardness; and
- it increases the operating life of the sealing element.

It should in any case be pointed out that the sealing element for remote-control wires according to the present invention, described in one of its preferred but non-limiting embodiments, can undergo numerous modifications and variants, all included in the same innovative concept. The form and arrangement of the sealing rings, for example, can vary according to the particular destinations of use.

Furthermore, the proportions and dimensions of the components illustrated can vary as required according to the technical demands of use.

## Claims

1. A sealing element (22) for remote-control of the type comprising a flexible transmission wire (10) capable of axially running inside a reaction sheath (12), said sheath (12) being integral, in correspondence with one of its ends, with a hollow cylindrical body (14) in which said wire (10) runs and on which one or more grooves (20) are envisaged, for the insertion of said sealing element (22), **characterized in that** it comprises an outer sleeve (24) in which at least one sealing ring (26) is coaxially inserted.

2. The sealing element (22) according to claim 1, **characterized in that** said outer sleeve (24) and said internal sealing ring (26) are made of a deformable elastic material.

3. The sealing element (22) according to claim 2, **characterized in that** said outer sleeve (24) is made of a material having a different hardness with respect to the material with which said internal sealing ring (26) is made.

4. The sealing element (22) according to claim 3, **characterized in that** said outer sleeve (24) is made of a harder material with respect to the material with which said internal sealing ring (26) is made.

5. The sealing element (22) according to claim 3, **characterized in that** said outer sleeve (24) is made of a softer material with respect to the material with which said internal sealing ring (26) is made.

6. The sealing element (22) according to claim 3, **characterized in that** said internal sealing ring (26) is made of rubber.

7. The sealing element (22) according to claim 3, **characterized in that** said internal sealing ring (26) is a ring of the 0-ring type.

8. The sealing element (22) according to claim 1, **characterized in that** said outer sleeve (24) and said internal sealing ring (26) are provided with an internal circumferential cavity (38) which defines a chamber which can be filled with lubricating fluid.

9. The sealing element (22) according to claim 8, **characterized in that** said internal circumferential cavity (38) is situated in the contact portion between said outer sleeve (24) and said internal sealing ring (26).

10. The sealing element (22) according to claim 1, **characterized in that** said outer sleeve (24) is provided, at one end, with a first hole (28) suitable for the insertion of the sealing element (22) in the groove (20) of said hollow cylindrical body (14), and, at the opposite end, with a second hole (30) destined for providing said wire (10) with a seal.

11. The sealing element (22) according to claim 10, **characterized in that** said second hole (30) has a smaller diameter with respect to said first hole (28).

12. The sealing element (22) according to claim 11, **characterized in that** said second hole (30) envisages a first portion (32) having a smaller diameter with respect to the diameter of said wire (10), a second portion (34) having a larger diameter with respect to the diameter of said wire (10) and a connecting portion (36) between said first portion (32) and second portion (34).
